# EUROPEAN PATENT SPECIFICATION

(11) **EP 2 134 161 B1**
(45) Date of publication and mention of the grant of the patent: **18.03.2015**
(21) Application number: 08741841.4
(22) Date of filing: 08.04.2008
(51) Int. Cl.: A01K 5/02

(54) **Feeding system and method**
Fütterungssystem und -verfahren
Système et procédé d'alimentation

(30) Priority: 10.04.2007 SE 0700865
(43) Date of publication of application: 23.12.2009
(73) Proprietor: DeLaval Holding AB, 147 21 Tumba (SE)
(72) Inventor: DE VILLIERS, Pierre, S-146 50 Tullinge (SE)
(74) Representative: Keijser Bergöö, Malin Katarina
(86) International application number: PCT/SE2008/000249
(87) International publication number: WO 2008/123820

(56) References cited:
- WO-A-2005/067704
- WO-A1-2008/097080
- DE-U1- 20 115 929
- FR-A- 2 689 727
- NL-C2- 1 030 090
- US-A- 4 712 511

## Description

### TECHNICAL FIELD OF THE INVENTION

The present invention generally relates to a system and a method for feeding at least one animal with mixed feed, especially mixed feed comprising solid ingredients, according to a selected recipe.

### BACKGROUND OF THE INVENTION

Feeding arrangements for animals on a farm typically have different sections or areas intended for different groups of animals respectively. The different groups of animals may have different needs with regards to their feed composition so as to optimise the milk production, body condition scoring (BCS) or other desired qualities of the animals. Important for many feeding schemes is that there is a constant supply of feed for the animals so that there is a constant feed available to optimize dry matter intake.

WO 2005/067704 discloses an arrangement for feeding animals on a farm comprising an on-farm analyzer device provided for measuring, e.g. at least on a daily basis, the amount of a constituent of solid feed to be fed to said animals, and a feeding device provided for feeding said animals, wherein the feeding depends on the result of said measurement, and the amount of the constituent of solid feed is measured immediately prior to the feeding of said animals. By the arrangement, a proper solid feed mix with a balanced composition can be given to the animals.

FR 2689727 discloses equipment including a number of positions for distributing a feed mixture. These are supplied via a mixer with powdered milk, water, pure milk from a tank and various additives from a battery of dosing pumps. The pumps are controlled by a computer system to dispense required quantities. Each animal arriving at a position is identified, and supplied with an amount of food - possibly 500 grams - and this is recorded for the particular animal. If there is any left when the animal leaves, this is also noted, so that an accurate record of consumption is produced. The invention provides accurate control of the feed amount taking into consideration varying conditions e.g. season, and improves the well-being of the individual animal by allowing it to eat or drink whenever it feels hungry or thirsty.

US 4712511 discloses a feed delivery system for individualized rations for specific livestock including a programmable controller responsive to the status of the livestock. Individual elements of a feed ration are combined to meet the requirements of a specific animal and delivered only to that animal. Plural delivery containers may each be loaded with different rations for different animals. The inventive concept may also be used for delivery of food to hospital patients having different dietary requirements, for delivery of different components to various worksites in a manufacturing process, or for delivery of chemicals to a chemical process.

DE 20115929 U 1 discloses a vehicle for mixing and discharging biomass, with at least one remotely fillable mixing chamber which contains a vertical mixing screw and each of which is assigned at least one, in particular lateral, discharging device, a chassis with a propelling drive, a drive system for optionally driving the vertical mixing screw, the discharging device and the chassis, at least one electronic, programmable biomass weighing device, and an automatic computerized control device. In one embodiment there is optionally a further weighing device provided at the respective feeding place, said weighing device outputting a requirement signal if fodder is no longer present or if the fodder has dropped below a minimum weight. This requirement signal is picked up by the control device and, via a weighing computer assigned to the respective weighing device, used for approaching and charging the feeding place.

NL 1030090 C and intermediate document WO 2008/097080 A1 disclose a feeding system and method according to the preamble of independent claims 1 and 12 respectively.

### SUMMARY OF THE Invention

It is an object of the present invention to provide a system and a method, respectively, for feeding at least one animal with mixed feed, especially mixed feed comprising solid ingredients, according to a selected recipe so that the animal always has desired access to feed and that the feed may be optimally composed with regard to composition of the ingredients of the feed.

It is also an object of the present invention to provide such a system and such a method, by which the amount of feed supplied to the animal can be controlled.

It is a further object of the invention to provide such a system and such a method which are reliable and fully or partly automated.

The above objects, among others, are according to the present invention attained by systems and methods as specified in the appended claims.

According to claim 1 there is provided a system for feeding an animal with mixed feed, especially mixed feed comprising solid ingredients, according to a selected recipe comprising a mixing device, a control device, a feed area, and a feed measurement arrangement such as a feed weighing arrangement.

The control device is connected to the mixing device and controls the mixing device to mix a batch of feed according to the selected recipe. The feed area is adapted for receiving the batch of mixed feed and for offering the batch to the animal. The feed measurement arrangement is located in connection with the feed area and measures repeatedly the amount of mixed feed that is left for consumption by the animal.

The control device, which is connected to the feed measurement arrangement, compares values of the repeatedly measured amount of mixed feed that is left for consumption with a threshold value and controls the mixing device to mix a further batch of feed according to the selected recipe when the values of the repeatedly measured amount of mixed feed that is left for consumption fall below the threshold value.

The control device is arranged to set said threshold value so that the further batch of mixed feed will be supplied to the feed area before the animal has consumed the entire amount of mixed feed according to the selected recipe that is left for consumption.

By such a system it can be ensured that the animal always has desired access to mixed feed according to the selected recipe. Hereby, the dry matter intake can be optimized.

In one embodiment of the invention the mixing device or a separate feed supplying device is an automated device provided for automatically supplying each of the batches of mixed feed according to the selected recipe to the feed area.

Hereby, an entirely automated feeding arrangement that supplies the animal with feed is provided.

In another embodiment of the invention a notifying apparatus such as for instance a device for visual or sound notification is provided for automatically notifying the farmer in connection with the mixing of the further batch of feed according to the selected recipe in order to alert the farmer that the further batch of mixed feed shall be supplied to the feed area.

This alert could be made early so as to allow the farmer to plan his/her working operations.

In yet another embodiment of the invention the feeding system of the invention is implemented at a farm wherein a plurality of separated groups of animals are supplied group wise with feed, each according to a respective selected recipe. The feeding system measures and supplies mixed feed to each of the groups of animals separately according to any of the above approaches. According to claim 12 there is provided a method for feeding an animal with mixed feed according to a selected recipe. According to the feeding method a batch of feed, especially feed comprising solid ingredients, is mixed according to the selected recipe and the batch of mixed feed is offered to the animal at a feed area.

The amount of mixed feed according to the selected recipe that is left at the feed area for consumption is repeatedly measured; values of the repeatedly measured amount of mixed feed that is left for consumption are compared with a threshold value; and a further batch of feed is mixed according to the selected recipe as soon as the values of the repeatedly measured amount of mixed feed that is left for consumption fall below the threshold value.

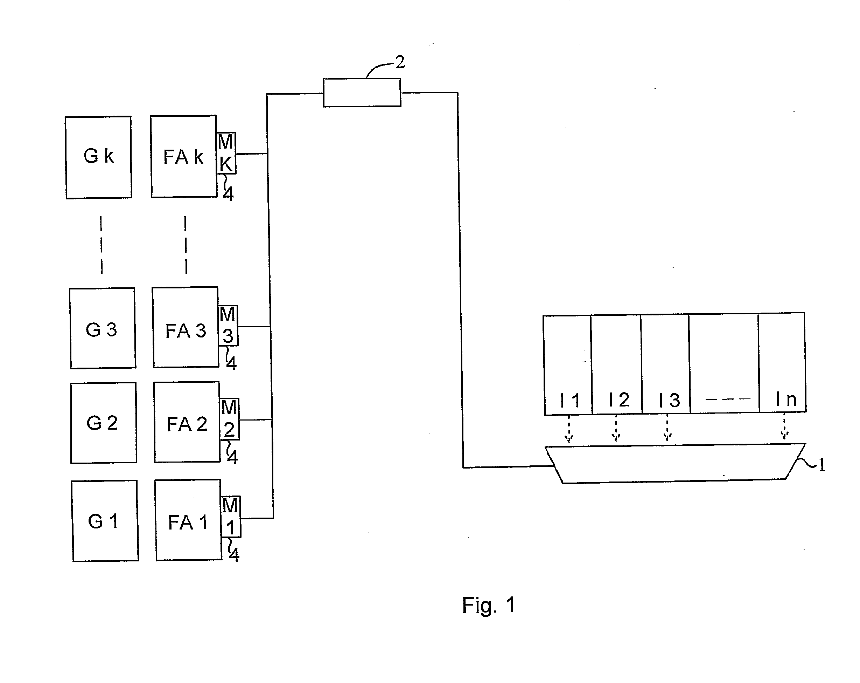

Further characteristics of the invention, and advantages thereof, will be evident from the following detailed description of embodiments of the invention given hereinafter and the accompanying Figs. 1-6, which are given by way of illustration only, and thus are not limitative of the present invention.

### BRIEF DESCRIPTION OF THE DRAWINGS

Fig. 1 is a schematic view of a system for feeding at least one animal according to a first embodiment of the claimed invention.
Figs. 2a and 2b are schematic views of two embodiments of a mixer as being comprised in the system of Fig. 1.
Fig. 3 shows schematically a first embodiment of a method for automated delivery of a batch of mixed feed.
Fig. 4 shows schematically a second embodiment of a method for automated delivery of a batch of mixed feed.
Fig. 5 shows schematically an embodiment of a method for delivery of a batch of mixed feed that requires manual intervention by a farmer.
Fig. 6 shows schematically a flowchart of a method for feeding at least one animal according to an embodiment of the invention.

### DETAILED DESCRIPTION OF EMBODIMENTS

A system for feeding, which is shown in Fig. 1, comprises a mixer or mixing device 1, a control device 2, a feed area 3, and a feed measuring arrangement 4.

The control device 2 is operatively connected to the mixing device 1 and is provided for controlling the mixing device 1 to mix or make a batch of feed comprising solid ingredients according to a selected recipe. The feed area 3 is provided for receiving the batch of mixed feed according to the selected recipe and for offering the batch of mixed feed to at least one animal. The measuring arrangement 4 is located in connection with the feed area 3 and is provided for repeatedly or continuously measuring the amount of existing remaining mixed feed according to the selected recipe at the feed area 3. The control device 2 is operatively connected to the measuring arrangement 4 and is provided to repeatedly or constantly compare the measured existing remaining amount of feed at the feed area 3 with a threshold value and when it falls below the threshold, to control the mixing device 1 to mix or make a new batch of feed according to the selected recipe.

The feed area 3 may comprise, as being illustrated, a plurality of feed areas or tables FA1, FA2, FA3 ... FAk. Each of a plurality of animals may have access to a respective one of the feed tables FA1, FA2, FA3 ... FAk and each of animals could be fed with feed mixed according to a respective selected recipe that is adjusted for that animal. Therefore, the different feed tables FA1, FA2, FA3 ... FAk are intended for feed of different recipes.

The measuring arrangement 4 measures continuously the amount of existing remaining mixed feed at each feed table FA1, FA2, FA3 ... FAk separately and sends the measurement data to the control device 2. In the case of having a plurality of feed tables FA1, FA2, FA3 ... FAk, each feed table has its own measuring unit as illustrated in Fig. 1 by M1, M2, M3 ...Mk.

The control device 2, which is operatively connected to both the mixing device 1 and the measuring arrangement 4, comprises storage means for storing different recipes intended for the different feed tables FA1, FA2, FA3 ... FAk, and processing means for comparing the information received from the measuring arrangement 4 with at least one threshold value. As the control device 2 detects that the amount of existing remaining mixed feed at one of the feed tables FA1, FA2, FA3 ... FAk has fallen below a certain threshold value, it automatically controls the mixing device 1 to make a new batch of feed according to the recipe for that feed table.

The threshold values are typically chosen, according to the invention, in such a way that ample time is given for the mixing device 1 to mix a new batch of feed and for delivery to the feed tables before the animals at that feed table run out of feed, i.e. it is preferable that the making of a new batch of feed is started well before the amount of existing remaining mixed feed at the feed area is zero.

The feed measuring arrangement 4 may be realized in several ways. It is preferable that the measuring arrangement is a weighing arrangement such as a weighing arrangement comprising weigh-bars, but also other solutions are possible such as level detectors, e.g. optical level detectors, volume estimating devices, and the like.

The recipe stipulates the different ingredients the mixing device 1 is to use when mixing a batch of feed. The different ingredients are illustrated in Fig. 1 by I1, I2, I3 ... In.

The mixing device 1 can be realized in several ways.

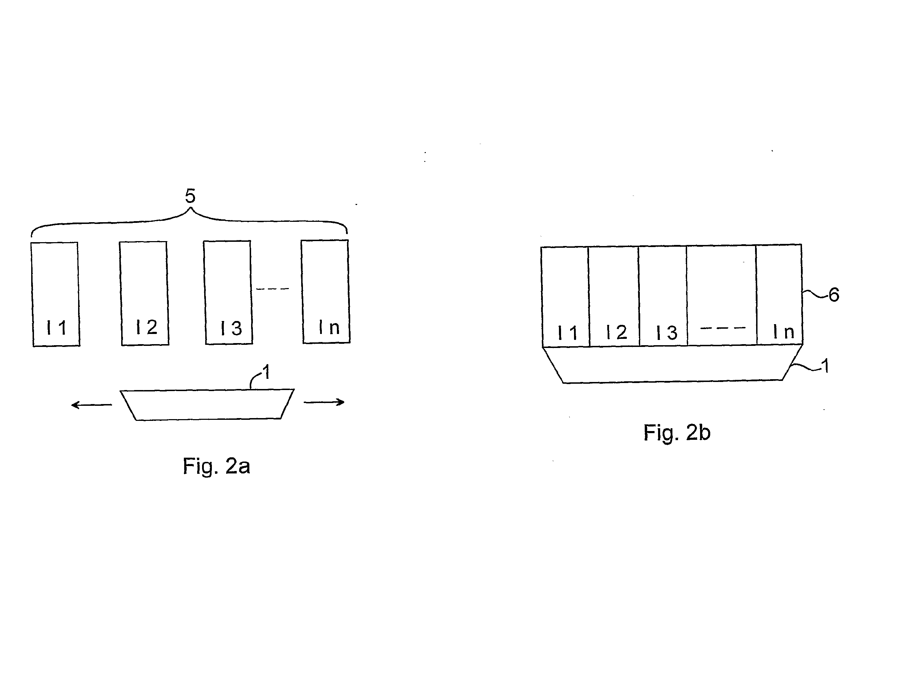

Fig. 2a shows an embodiment where the mixing device 1 may collect different ingredients, such as various solid ingredients, according to a selected recipe from various stations, magazines, silos, or storage areas 5 that are separated from each other.

Fig. 2b shows another embodiment wherein the mixing device 1 comprises different compartments 6 intended for different solid ingredients that are used to mix a batch of feed according to a selected recipe. In this embodiment the mixing device 1 preferably has means to detect if the level of the ingredient in any of the different compartments falls below a certain threshold value so that it can be filled up.

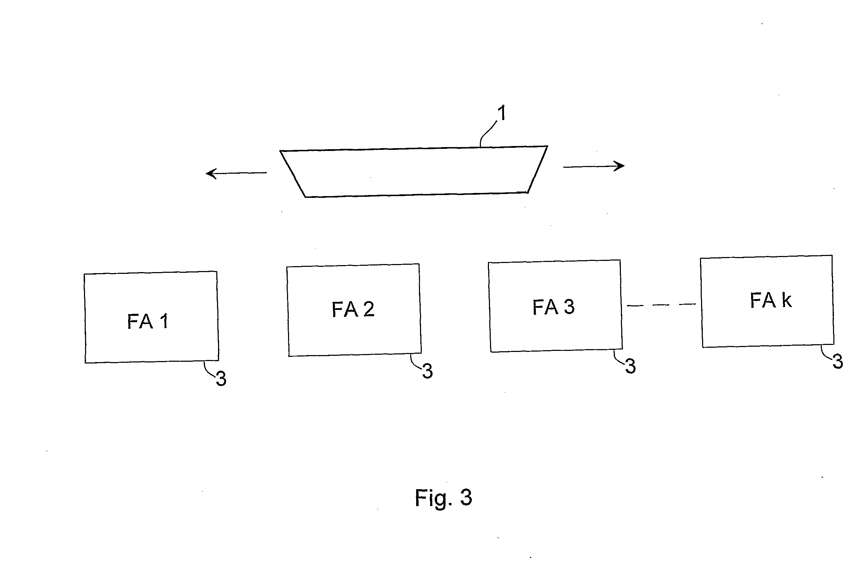

It is also preferable to have the feeding system fully automated so that no manual intervention is needed, i.e. a new batch of mixed feed is automatically delivered to a feed area or feed table. This can be implemented in numerous ways as exemplified by Figs. 3-5 respectively.

Fig. 3 shows an embodiment in which the mixing device 1 is movable so as to move to the specific feed table FA1, FA2, FA3 ... FAk and make a new batch of mixed feed, especially mixed feed comprising solid ingredients, for that feed table in place.

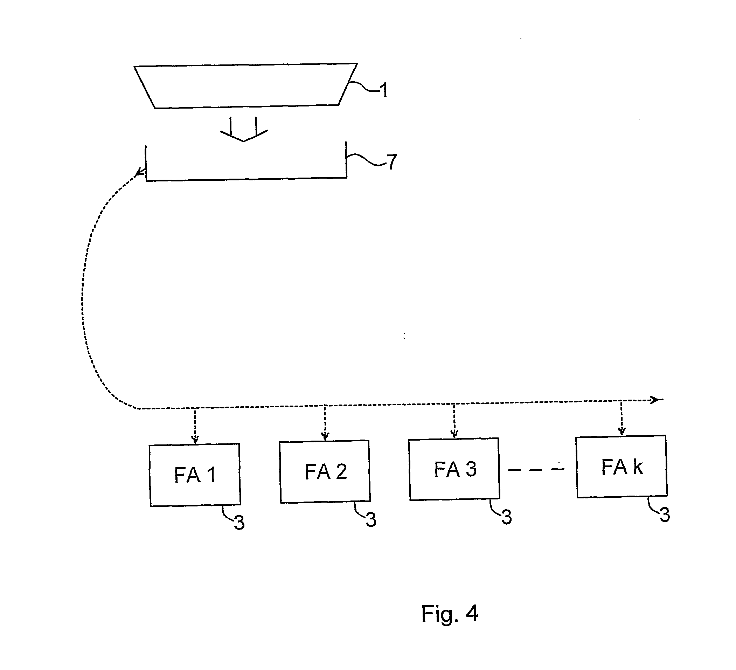

Fig. 4 shows an embodiment in which an automated feeder 7 is arranged to collect the batch of mixed feed from the mixing device 1 and to deliver to a feed table FA1, FA2, FA3 ... FAk.

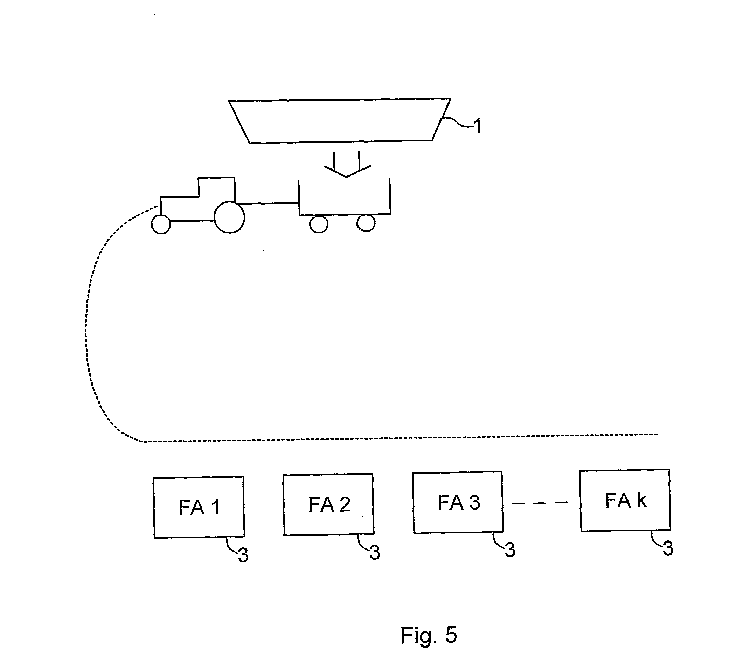

Fig. 5 shows another embodiment in which a batch of mixed feed is delivered manually. Here, the control device notifies a farmer that a new batch of mixed feed is ready for delivery to one feed table FA1, FA2, FA3 ... FAk where the amount of existing remaining mixed feed at that feed table has fallen below a certain threshold value. The notification of the farmer can be realized in several ways, an audible alarm, a message on a display and/or by sending an SMS to the farmer's cellular phone as a few examples.

Each of the feed tables FA1, FA2, FA3 ... FAk can be accessible to a plurality of animals. On a farm it is often the case that different animals have different needs regarding their respective feed composition. The present invention provides an arrangement for also very large-scale farms with many animals, where the animals are grouped into groups G1, G2, G3 ... Gk (see Fig. 1) with regards to their individual feed composition needs. For instance, the animals may be grouped into different groups based on their lactation statuses and/or their levels of milk production. The feed tables FA1, FA2, FA3 ... FAk should therefore be supplied with feed of different recipes regarding feed composition intended for the different groups G1, G2, G3 ... Gk respectively. Each feed table FA1, FA2, FA3 ... FAk is accessible for a specific group G1, G2, G3 ... Gk of animals of 1 up to e.g. 100 animals.

The present invention is suitable for use in combination with total mixed ration (TMR) feeding programs and partially mixed ration (PMR) feeding programs. TMR is defined as those with all the roughage, ensilage, concentrate and grain ingredients blended together, formulated to specific nutrient concentration and fed free choice. In PMR programs, at least one component of the feed is given to the animals (cows) on an individual basis. The different recipes for the different areas may be based on TMR and/or PMR.

In particular, the invention provides for the use of feeding schemes to optimize dry matter intake, e.g. by ensuring that the animal(s) always has/have desired access to mixed feed according to the selected recipe.

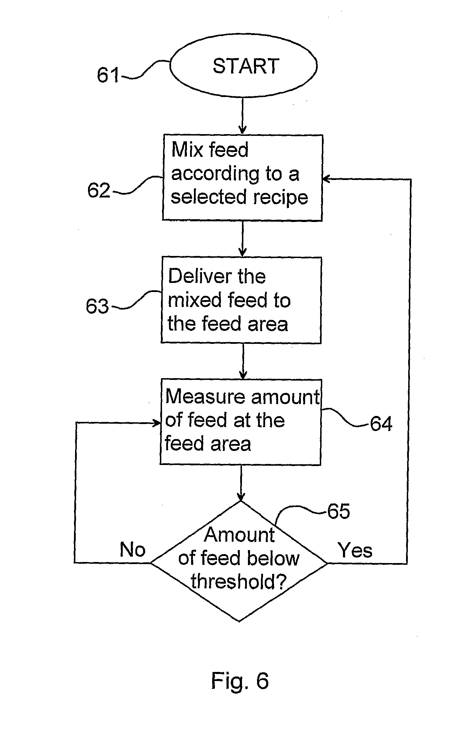

The present invention is also directed to a method for feeding at least one animal with mixed feed, especially mixed feed comprising solid ingredients, according to a selected recipe. According to the method as depicted in the flowchart of Fig. 6, a batch of mixed feed is mixed by the mixing device according to a selected recipe (step 62). Then, the batch of mixed feed is offered to the at least one animal at the feed area (step 63). The amount of existing remaining feed at the feed area is measured (step 64). Next, the measured amount of existing remaining feed at the feed area is compared with a threshold value (step 65). If the amount of existing remaining feed at the feed area has fallen below the threshold, the method returns to step 62 wherein a new batch of mixed feed is mixed by the mixing device according to the selected recipe. If the amount of existing remaining feed at the feed area is still above the threshold value, the method returns to step 64 to again measure the amount of existing remaining feed at the feed area, possibly after a short time delay.

Steps 64 and 65 thus form a loop of repeatedly measuring and comparing until the threshold is passed. Steps 62 and 63 forms a procedure of feed mixing and delivering, which is performed each time the measured amount of existing remaining feed at the feed area is below the threshold value.

The present invention is suitable for many different animals. The present invention is very suitable for e.g. cows wherein the composition of and the constant accessibility to the feed affect the amount and the quality of the milk. But the present invention is just as suitable for animals with lesser requirements regarding feed composition. It may be of interest to ensure that the animals have constant access to mixed feed and it may be equally important to ensure that the animals don't eat too much but instead have limited access to feed such as e.g. when feed is used for enticing animals to visit a milking station.

It shall be appreciated that the different embodiments and variants of the present invention as being described above can be readily combined in order to reach yet further embodiments of the invention, as defined by the appended claims.

## Claims

1. A system for feeding at least one animal with mixed feed according to a selected recipe comprising:
- a mixing device (1);
- a control device (2) operatively connected to said mixing device (1) and provided for controlling the mixing device (2) to mix a batch of feed according to the selected recipe;
- a feed area (3) provided for receiving said batch of mixed feed according to the selected recipe and for offering said batch to the at least one animal;
- a feed measurement arrangement (4) in connection with said feed area (3) provided for repeatedly measuring the amount of mixed feed according to the selected recipe that is left for consumption by the at least one animal, wherein
- said control device (2) is (i) operatively connected to said feed measurement arrangement (4); (ii) provided for comparing values of said repeatedly measured amount of mixed feed according to the selected recipe that is left for consumption by the at least one animal with a threshold value; and (iii) provided for controlling said mixing device (1) to mix a further batch of feed according to the selected recipe when the values of said repeatedly measured amount of mixed feed according to the selected recipe that is left for consumption by the at least one animal fall below said threshold value,
**characterized in that**
the control device (2) is arranged to set said threshold value so that the further batch of mixed feed will be supplied to the feed area before the at least one animal has consumed the entire amount of mixed feed according to the selected recipe that is left for consumption.

2. The system of claim 1 wherein said feed measurement arrangement (4) is a weighing arrangement provided for repeatedly measuring the amount of mixed feed according to the selected recipe that is left for consumption by the at least one animal by means of repeatedly weighing said mixed feed.

3. The system of claim 1 wherein said feed measurement arrangement (4) is a level detecting device.

4. The system of any of claims 1-3 wherein said mixing device (1) is an automated device and comprises means provided for automatically supplying each of the batches of mixed feed according to the selected recipe to the feed area (3).

5. The system of any of claims 1-3 comprising a separate feed supplying device (7) having means provided for automatically collecting each of the batches of mixed feed according to the selected recipe and supplying it to the feed area (3).

6. The system of any of claims 1-3 comprising notifying means provided for automatically notifying a farmer in connection with the mixing of said further batch of feed according to the selected recipe to alert the farmer that said further batch of mixed feed is to be supplied to the feed area (3).

7. The system of any of claims 1-6 provided for feeding a plurality of animals with mixed feed according to the selected recipe, wherein said feed area (3) is accessible to the plurality of animals.

8. The system of any of claims 1-6 provided for feeding each of a plurality of groups (G1, G2, G3 ... Gk) of animals with mixed feed according to a respective selected one of a plurality of different recipes, wherein
- a plurality of feed areas (FA1, FA2, FA3 ... FAk) are provided, each being accessible to a respective one of the plurality of groups of animals (G1, G2, G3 ... Gk);
- said control device (2) is, for each of the plurality of groups of animals (G1, G2, G3 ... Gk), provided for controlling said mixing device to mix a batch of feed according to the selected recipe for the group of animals (G1, G2, G3 ... Gk);
- each of the feed areas (FA1, FA2, FA3 ... FAk) is provided for receiving a respective one of the batches of mixed feed and for offering said batch to the animals of the group of animals (G1, G2, G3 ... Gk) having access to the feed area (FA1, FA2, FA3 ... FAk),
- said feed measurement arrangement (4) is provided for repeatedly measuring the amount of mixed feed that is left for consumption at each of the feed areas (FA1, FA2, FA3 ... FAk) separately, wherein
- said control device (2) is, for each of the feed areas (FA1, FA2, FA3 ... FAk), provided for (i) comparing values of said repeatedly measured amount of mixed feed that is left for consumption at the feed area (FA1, FA2, FA3 ... FAk) with a respective threshold value; and (ii) controlling said mixing device (1) to mix a further batch of feed according to the selected recipe for the group of animals (G1, G2, G3 ... Gk) having access to the feed area (FA1, FA2, FA3 ... FAk) when the values of said repeatedly measured amount of mixed feed that is left for consumption at the feed area (FA1, FA2, FA3 ... FAk) fall below the threshold value.

9. The system of any of claims 1-8 wherein said feed area provided for receiving said batch of mixed feed according to the selected recipe and for offering said batch to the at least one animal is a feed table.

10. The system of any of claims 1-9 wherein said mixed feed comprises one or more solid ingredients, in particular roughage, ensilage, concentrate and grain ingredients blended together.

11. The system of any of claims 1-10 wherein said system is provided for feeding the at least one animal with mixed feed according to the selected recipe in order to optimize the dry matter intake by the at least one animal.

12. A method for feeding at least one animal with mixed feed according to a selected recipe comprising:
- mixing a batch of feed according to the selected recipe by a mixing device (1); and
- offering said batch of mixed feed according to the selected recipe to the at least one animal at a feed area (3),
- repeatedly measuring the amount of mixed feed according to the selected recipe that is left at the feed area (3) for consumption by the at least one animal;
- comparing values of said repeatedly measured amount of mixed feed that is left for consumption with a threshold value; and
- mixing a further batch of feed according to the selected recipe by the mixing device (1) when the values of said repeatedly measured amount of mixed feed that is left for consumption fall below said threshold value, wherein said method is **characterized in that**
said threshold value is set so that the further batch of mixed feed will be supplied to the feed area before the at least one animal has consumed the entire amount of mixed feed according to the selected recipe that is left for consumption.

13. The method of claim 12 wherein the amount of mixed feed according to the selected recipe that is left at the feed area (3) for consumption by the at least one animal is repeatedly measured by means of weighing.

## Patentansprüche

1. System zum Füttern von mindestens einem Tier mit Mischfutter entsprechend einem ausgewählten Rezept, umfassend:
- eine Mischvorrichtung (1);
- eine Steuervorrichtung (2), die funktionsfähig mit der Mischvorrichtung (1) verbunden ist und zum Steuern der Mischvorrichtung (2) vorgesehen ist, damit sie eine Ration Futter entsprechend dem ausgewählten Rezept mischt;
- einen Futterbereich (3), der zum Aufnehmen der Ration Mischfutter entsprechend dem ausgewählten Rezept und zum Anbieten der Ration an das mindestens eine Tier vorgesehen ist,
- eine Futtermessanordnung (4) in Verbindung mit dem Futterbereich (3), die zum wiederholten Messen der Menge Mischfutter entsprechend dem ausgewählten Rezept, die zum Fressen für das mindestens eine Tier übrig ist, vorgesehen ist, wobei
- die Steuervorrichtung (2) (i) funktionsfähig mit der Futtermessanordnung (4) verbunden ist; (ii) zum Vergleichen von Werten der wiederholt gemessenen Menge Mischfutter entsprechend dem ausgewählten Rezept, die zum Fressen für das mindestens eine Tier übrig ist, mit einem Schwellenwert vorgesehen ist; und (iii) zum Steuern der Mischvorrichtung (1) vorgesehen ist, damit sie eine weitere Ration Futter entsprechend dem ausgewählten Rezept mischt, wenn die Werte der wiederholt gemessenen Menge Mischfutter entsprechend dem ausgewählten Rezept, die zum Fressen für das mindestens eine Tier übrig ist, unter den Schwellenwert fallen,
**dadurch gekennzeichnet, dass**
die Steuervorrichtung (2) so angeordnet ist, dass sie den Schwellenwert so einstellt, dass die weitere Ration Mischfutter dem Futterbereich zugeführt wird, bevor das mindestens eine Tier die gesamte Menge Mischfutter entsprechend dem ausgewählten Rezept, die zum Fressen übrig ist, aufgefressen hat.

2. System nach Anspruch 1, wobei es sich bei der Futtermessanordnung (4) um eine Wiegeanordnung handelt, die zum wiederholten Messen der Menge Mischfutter entsprechend dem ausgewählten Rezept, die zum Fressen für das mindestens eine Tier übrig ist, mittels wiederholtem Wiegen des Mischfutters vorgesehen ist.

3. System nach Anspruch 1, wobei es sich bei der Futtermessanordnung (4) um eine Füllstandserfassungsvorrichtung handelt.

4. System nach einem der Ansprüche 1 bis 3, wobei die Mischvorrichtung (1) eine automatisierte Vorrichtung ist und Mittel umfasst, die zum automatischen Zuführen von jeder der Rationen Mischfutter entsprechend dem ausgewählten Rezept zu dem Futterbereich (3) vorgesehen sind.

5. System nach einem der Ansprüche 1 bis 3, das eine separate Futterzufuhrvorrichtung (7) mit Mitteln umfasst, die zum automatischen Aufnehmen von jeder der Rationen Mischfutter entsprechend dem ausgewählten Rezept und zum Zuführen desselben zum Futterbereich (3) vorgesehen sind.

6. System nach einem der Ansprüche 1 bis 3, das Benachrichtigungsmittel zum automatischen Benachrichtigen eines Bauern in Verbindung mit dem Mischen der weiteren Ration Futter entsprechend dem ausgewählten Rezept umfasst, damit dem Bauern gemeldet wird, dass die weitere Ration Mischfutter dem Futterbereich (3) zugeführt werden soll.

7. System nach einem der Ansprüche 1 bis 6, das zum Füttern einer Vielzahl von Tieren mit Mischfutter entsprechend dem ausgewählten Rezept vorgesehen ist, wobei der Futterbereich (3) für die Vielzahl von Tieren zugänglich ist.

8. System nach einem der Ansprüche 1 bis 6, das zum Füttern von jeder aus einer Vielzahl von Gruppen (G1, G2, G3 ... Gk) von Tieren mit Mischfutter gemäß einem jeweiligen ausgewählten aus einer Vielzahl unterschiedlicher Rezepte vorgesehen ist, wobei
- eine Vielzahl von Futterbereichen (FA1, FA2, FA3 ... FAk) vorgesehen ist, die jeweils für eine jeweilige aus der Vielzahl von Gruppen von Tieren (G1, G2, G3 ... Gk) zugänglich ist;
- die Steuervorrichtung (2) für jede von der Vielzahl von Gruppen von Tieren (G1, G2, G3 ... Gk) zum Steuern der Mischvorrichtung vorgesehen ist, damit sie eine Ration Futter entsprechend dem ausgewählten Rezept für die Gruppe von Tieren (G1, G2, G3 ... Gk) mischt;
- jeder der Futterbereiche (FA1, FA2, FA3 ... FAk) zum Aufnehmen einer jeweiligen der Rationen Mischfutter und zum Anbieten der Ration an die Tiere der Gruppe von Tieren (G1, G2, G3 ... Gk), die Zugang zu dem Futterbereich (FA1, FA2, FA3 ... FAk) haben, vorgesehen ist,
- die Futtermessanordnung (4) dazu vorgesehen ist, die Menge Mischfutter, die zum Fressen übrig ist, in jedem der Futterbereiche (FA1, FA2, FA3 ... FAk) separat wiederholt zu messen, wobei
- die Steuervorrichtung (2) für jeden der Futterbereiche (FA1, FA2, FA3 ... FAk) vorgesehen ist zum (i) Vergleichen von Werten der wiederholt gemessenen Menge Mischfutter, die in dem Futterbereich (FA1, FA2, FA3 ... FAk) zum Fressen übrig ist, mit einem entsprechenden Schwellenwert; und zum (ii) Steuern der Mischvorrichtung (1), damit sie eine weitere Ration Futter entsprechend dem ausgewählten Rezept für die Gruppe von Tieren (G1, G2, G3 ... Gk) mischt, die Zugang zu dem Futterbereich (FA1, FA2, FA3 ... FAk) haben, wenn die Werte der wiederholt gemessenen Menge Mischfutter, die in dem Futterbereich (FA1, FA2, FA3 ... FAk) zum Fressen übrig ist, unter den Schwellenwert fallen.

9. System nach einem der Ansprüche 1 bis 8, wobei es sich bei dem Futterbereich, der zum Aufnehmen der Ration Mischfutter entsprechend dem ausgewählten Rezept und zum Anbieten der Ration an das mindestens eine Tier vorgesehen ist, um einen Futtertisch handelt.

10. System nach einem der Ansprüche 1 bis 9, wobei das Mischfutter einen oder mehrere feste Inhaltsstoffe umfasst, insbesondere Raufutter, Silage, Konzentrat und Getreideinhaltsstoffe, die miteinander vermischt sind.

11. System nach einem der Ansprüche 1 bis 10, wobei das System zum Füttern des mindestens einen Tiers mit Mischfutter entsprechend dem ausgewählten Rezept vorgesehen ist, damit die Trockensubstanzaufnahme von dem mindestens einen Tier optimiert wird.

12. Verfahren zum Füttern von mindestens einem Tier mit Mischfutter entsprechend einem ausgewählten Rezept, umfassend:
- Mischen einer Ration Futter entsprechend dem ausgewählten Rezept mit einer Mischvorrichtung (1); und
- Anbieten der Ration Mischfutter entsprechend dem ausgewählten Rezept an das mindestens eine Tier in einem Futterbereich (3),
- wiederholtes Messen der Menge Mischfutter entsprechend dem ausgewählten Rezept, die zum Fressen für das mindestens eine Tier in dem Futterbereich (3) übrig ist;
- Vergleichen von Werten der wiederholt gemessenen Menge Mischfutter, die zum Fressen übrig ist, mit einem Schwellenwert; und
- Mischen einer weiteren Ration Futter entsprechend dem ausgewählten Rezept mit der Mischvorrichtung (1), wenn die Werte der wiederholt gemessenen Menge Mischfutter, die zum Fressen übrig ist, unter den Schwellenwert fallen, wobei das Verfahren **dadurch gekennzeichnet ist, dass**
der Schwellenwert so eingestellt wird, dass die weitere Ration Mischfutter dem Futterbereich zugeführt wird, bevor das mindestens eine Tier die gesamte Menge Mischfutter entsprechend dem ausgewählten Rezept, die zum Fressen übrig ist, aufgefressen hat.

13. Verfahren nach Anspruch 12, wobei die Menge Mischfutter entsprechend dem ausgewählten Rezept, die zum Fressen für das mindestens eine Tier in dem Futterbereich (3) übrig ist, wiederholt mittels Wiegen gemessen wird.

## Revendications

1. Système destiné à alimenter au moins un animal avec des aliments composés selon une recette sélectionnée, comprenant:
- un dispositif de mélange (1) ;
- un dispositif de commande (2) relié de manière fonctionnelle audit dispositif de mélange (1) et destiné à commander le dispositif de mélange (2) pour qu'il mélange une ration d'aliments selon la recette sélectionnée ;
- une zone d'alimentation (3) destinée à recevoir ladite ration d'aliments composés selon la recette sélectionnée et pour présenter ladite ration à l'au moins un animal ;
- un agencement de mesure d'aliments (4) en liaison avec ladite zone d'alimentation (3) destiné à mesurer à plusieurs reprises la quantité d'aliments composés selon la recette sélectionnée qui reste pour la consommation par l'au moins un animal, dans lequel
- ledit dispositif de commande (2) est (i) relié de manière fonctionnelle audit agencement de mesure d'aliments (4) ; (ii) destiné à comparer des valeurs de ladite quantité mesurée à plusieurs reprises d'aliments composés selon la recette sélectionnée qui reste pour la consommation par l'au moins un animal avec une valeur seuil ; et (iii) destiné à commander ledit dispositif de mélange (1) pour qu'il mélange une autre ration d'aliments selon la recette sélectionnée quand les valeurs de ladite quantité mesurée à plusieurs reprises d'aliments composés selon la recette sélectionnée qui reste pour la consommation par l'au moins un animal passent sous ladite valeur seuil,
**caractérisé en ce que**
- le dispositif de commande (2) est agencé pour régler ladite valeur seuil de sorte que l'autre ration d'aliments composés sera acheminée dans la zone d'alimentation avant que l'au moins un animal ait consommé la quantité entière d'aliments composés selon la recette sélectionnée qui reste pour la consommation.

2. Système selon la revendication 1, dans lequel ledit agencement de mesure d'aliments (4) est un agencement de pesage destiné à mesurer à plusieurs reprises la quantité d'aliments composés selon la recette sélectionnée qui reste pour la consommation par l'au moins un animal au moyen du pesage à plusieurs reprises desdits aliments composés.

3. Système selon la revendication 1, dans lequel ledit agencement de mesure d'aliments (4) est un dispositif de détection de niveau.

4. Système selon l'une quelconque des revendications 1 à 3, dans lequel ledit dispositif de mélange (1) est un dispositif automatisé et comprend des moyens destinés à acheminer automatiquement chacune des rations d'aliments composés selon la recette sélectionnée dans la zone d'alimentation (3).

5. Système selon l'une quelconque des revendications 1 à 3, comprenant un dispositif d'acheminement d'aliments (7) séparé comportant des moyens destinés à recueillir automatiquement chacune des rations d'aliments composés selon la recette sélectionnée et acheminer ceux-ci dans la zone d'alimentation (3).

6. Système selon l'une quelconque des revendications 1 à 3, comprenant des moyens de notification destinés à notifier automatiquement un fermier en liaison avec le mélange de ladite autre ration d'aliments selon la recette sélectionnée afin de prévenir le fermier que ladite autre ration d'aliments composés doit être acheminée dans la zone d'alimentation (3).

7. Système selon l'une quelconque des revendications 1 à 6, destiné à alimenter une pluralité d'animaux avec des aliments composés selon la recette sélectionnée, dans lequel ladite zone d'alimentation (3) est accessible à la pluralité d'animaux.

8. Système selon l'une quelconque des revendications 1 à 6, destiné à alimenter chacun d'une pluralité de groupes (G1, G2, G3 ... Gk) d'animaux avec des aliments composés selon une recette sélectionnée respective d'une pluralité de recettes différentes, dans lequel
- une pluralité de zones d'alimentation (FA1, FA2, FA3 ... FAk) est mise à disposition, chacune étant accessible à un groupe respectif d'une pluralité de groupes d'animaux (G1, G2, G3 ... Gk) ;
- ledit dispositif de commande (2) est, pour chacun de la pluralité de groupes d'animaux (G1, G2, G3 ... Gk), destiné à commander ledit dispositif de mélange pour qu'il mélange une ration d'aliments selon la recette sélectionnée pour le groupe d'animaux (G1, G2, G3 ... Gk) ;
- chacune des zones d'alimentation (FA1, FA2, FA3 ... FAk) est destinée à recevoir une ration respective des rations d'aliments composés et à présenter ladite ration aux animaux du groupe d'animaux (G1, G2, G3 ... Gk) ayant accès à la zone d'alimentation (FA1, FA2, FA3 ... FAk),
- ledit agencement de mesure (4) est destiné à mesurer à plusieurs reprises la quantité d'aliments composés qui reste pour la consommation séparément dans chacune des zones d'alimentation (FA1, FA2, FA3 ... FAk), dans lequel
- ledit dispositif de commande (2) est, pour chacune des zones d'alimentation (FA1, FA2, FA3 ... FAk), destiné à (i) comparer des valeurs de ladite quantité mesurée à plusieurs reprises d'aliments composés qui reste pour la consommation dans la zone d'alimentation (FA1, FA2, FA3 ... FAk) avec une valeur seuil respective ; et (ii) commander ledit dispositif de mélange (1) pour qu'il mélange une autre ration d'aliments selon la recette sélectionnée pour le groupe d'animaux (G1, G2, G3 ... Gk) ayant accès à la zone d'alimentation (FA1, FA2, FA3 ... FAk) quand les valeurs de ladite quantité mesurée à plusieurs reprises d'aliments composés qui reste pour la consommation dans la zone d'alimentation (FA1, FA2, FA3 ... FAk) passent sous la valeur seuil.

9. Système selon l'une quelconque des revendications 1 à 8, dans lequel ladite zone d'alimentation destinée à recevoir ladite ration d'aliments composés selon la recette sélectionnée et à présenter ladite ration à l'au moins un animal est une table d'alimentation.

10. Système selon l'une quelconque des revendications 1 à 9, dans lequel lesdits aliments composés comprennent un ou plusieurs ingrédients solides, en particulier du fourrage grossier, du fourrage ensilé, du concentré et des ingrédients à base de céréales, mélangés ensemble.

11. Système selon l'une quelconque des revendications 1 à 10, dans lequel ledit système est destiné à alimenter l'au moins un animal avec des aliments composés selon la recette sélectionnée afin d'optimiser la prise de matière sèche par l'au moins un animal.

12. Procédé d'alimentation d'au moins un animal avec des aliments composés selon une recette sélectionnée, comprenant :
- le mélange d'une ration d'aliments selon la recette sélectionnée par un dispositif de mélange (1) ; et
- la présentation de ladite ration d'aliments composés selon la recette sélectionnée à l'au moins un animal dans une zone d'alimentation (3),
- la mesure à plusieurs reprises de la quantité d'aliments composés selon la recette sélectionnée qui reste dans la zone d'alimentation (3) pour la consommation par l'au moins un animal ;
- la comparaison de valeurs de ladite quantité mesurée à plusieurs reprises d'aliments composés qui reste pour la consommation avec une valeur seuil ; et
- le mélange d'une autre ration d'aliments selon la recette sélectionnée par le dispositif de mélange (1) quand les valeurs de ladite quantité mesurée à plusieurs reprises d'aliments composés qui reste pour la consommation passent sous ladite valeur seuil, dans lequel ledit procédé est **caractérisé en ce que**
ladite valeur seuil est réglée de sorte que l'autre ration d'aliments composés sera acheminée dans la zone d'alimentation avant que l'au moins un animal ait consommé la quantité entière d'aliments composés selon la recette sélectionnée qui reste pour la consommation.

13. Procédé selon la revendication 12, dans lequel la quantité d'aliments composés selon la recette sélectionnée qui reste dans la zone d'alimentation (3) pour la consommation par l'au moins un animal est mesurée à plusieurs reprises par pesage.
